# EUROPEAN PATENT SPECIFICATION

(11) **EP 1 591 184 B1**
(45) Date of publication and mention of the grant of the patent: **26.11.2008**
(21) Application number: 05103519.4
(22) Date of filing: 28.04.2005
(51) Int. Cl.: B23D 61/02, B23D 61/04, B23D 65/00

(54) **Method to make a tool for working wood or similar materials**
Verfahren zur Herstellung von einem Werkzeug zur Bearbeitung von Holz und dergleichem
Méthode pour la réalisation d'un outil pour le travail du bois ou matériaux similaires

(30) Priority: 29.04.2004 IT UD20040082
(43) Date of publication of application: 02.11.2005
(73) Proprietor: Pozzo SpA, 33010 Tavagnacco (UD) (IT)
(72) Inventor: Marcuzzi, Sandro, 33100 Udine (IT)
(74) Representative: Petraz, Davide Luigi

(56) References cited:
- EP-A- 0 739 697
- EP-A- 1 048 385
- US-A- 3 110 952
- US-A- 3 988 955
- US-A- 4 794 835
- US-A- 6 035 844
- PATENT ABSTRACTS OF JAPAN vol. 015, no. 138 (M-1100), 8 April 1991 (1991-04-08) -& JP 03 019727 A (AMADA CO LTD), 28 January 1991 (1991-01-28)

## Description

### FIELD OF THE INVENTION

The present invention concerns a method to make a tool for working wood or similar materials according to the preamble of claim 1. Such a method is known from EP 1048385.

### BACKGROUND OF THE INVENTION

Tools are known, such as for example circular blades, for cutting wood or similar materials, normally consisting of a flat steel body, shaped like a disk, which comprises a plurality of cutting elements, arranged in proximity with its circular outer surface, commonly called teeth. The latter are usually made of hard metal (HW) and are able to cut the wooden object by removing woodchip. Moreover, on the flat body there are normally seatings to discharge the chip and/or serpentine notches. The latter are able to absorb vibrations and to make the blade silent during use.

The teeth of conventional circular blades are normally attached to the flat body by means of a braze welding process, which consists in melting at relatively low temperatures, around 900°C, an alloy based on copper, silver, cadmium or otherwise, located between the flat body and the tooth itself.

During the usual technological cutting processes however, circular blades are subject to different types of wear, such as abrasive-type wear, due to the contact between the blade and the wood being worked, and also adhesive-type wear, due to the chemical-physical affinities between the blade and the wood being worked. They are also subject to damage, for example by splintering, when because of the wood that remains on the cutting edge of the teeth, small splinters of the latter are removed by tearing, or by cratering, due to the abrasive-adhesive phenomena on the breast of the blade, and others.

Such wear and damage, combined together, considerably reduce the life of the circular blade and also the quality of the cutting performed.

In the technology of constructing tools for working paper or metals, it is also known to cover externally one or more surfaces of the tool with a metal having a high level of hardness, by means of a process of chemical deposition in a vapor phase, in order to limit the wear, increase the duration and guarantee the sharpness over time of the teeth of said tools.

The known technique teaches the use of a heated chamber, or oven, into which the reagents in their vapor or gaseous state are introduced. Through chemical reactions of reduction or thermic decomposition, in the vapor phase, these provide to deposit covering layers on the outer surfaces of the tool, which acts as a catalyzer.

However, the heated chamber needs a working pressure of between about 10 and about 100 mbar, while the temperatures used during the process oscillate between about 800°C and about 1100°C.

These working parameters actually cause several disadvantages, including a considerable reduction in resistance to transverse breakage of the tool.

Moreover, this known technique cannot be used to cover tools for working wood or similar materials which, as we have seen, comprise braze welded alloys connecting the teeth and the flat body. The latter, moreover, is normally made of steels which have tempering temperatures of around 300°C, so that, if the above chemical deposition process were used, the mechanical characteristics of the flat body, and hence those of the whole tool, would be worse.

From EP-A-1 048 385 it is known a coating technique for forming an a disc-shaped tool a wear-resistant film capable of attaining high durability of such a tool, wherein the disc-shaped tool is composed essentially of a steel disc-shaped base plate having wear-resistant tips made of a cemented carbide, cermet or a wear-resistant cast alloy brazed thereto and a wear-resistant coating film formed by means of physical vapor deposition. The coating is designed to be applied over a range, with respect to a diameter of the base plate, of not less than 0.75 times the diameter, even if the same coating may be applied over a wider range of not less than 0.85 times the diameter. The wear-resistant film is based on a film-forming material selected from titanium carbide (TiC), titanium carbide nitride (TiC-N) having a C/N atomic ratio of more than 0.5 and titanium aluminum nitride (Ti-Al-N).

### SUMMARY OF THE INVENTION

The purpose of the present invention is to provide a method that allows to make a tool for working wood or similar materials resistant to phenomena of wear, without affecting the mechanical characteristics of the tool and of the materials of which it is made.

The present Applicant has devised, tested and embodied this invention to overcome the shortcomings of the state of the art and to obtain these and other purposes and advantages.

The present invention is set forth and characterized in independent claim 1, while the dependent claims 2-10 describe other characteristics or variants of the invention

The method to make a tool for working wood or similar materials comprises at least an assembly step wherein the cutting elements are arranged on the periphery of the central body, at least a loading step, after the assembly step, wherein the wood-working tool is positioned inside an environment with controlled pressure and temperature, and at least a vaporization step, wherein a third metal material is vaporized inside the environment with controlled pressure and temperature, in order to deposit a covering layer formed by said third metallic material on the outer surfaces of the wood-working tool.

According to the present invention, during the vaporization step, the working temperature is less than the tempering temperature of the first material; preferably less than about 300°C.

The materials can be vaporized using various known techniques, according to the properties that are to be conferred on the covering layer, provided that they include a maximum temperature of use that is lower than the tempering temperature of the second metallic material. To give an example, not restrictive, the vaporization can occur by means of evaporation with electronic band, magnetron pulverization, arc evaporation, whether this be with a hollow cathode, low voltage or under vacuum, or using other techniques of a conventional type.

With the method according to the present invention it is therefore possible to deposit on all the outer surfaces of the woodworking tool a covering layer without affecting the characteristics of the material that makes up the cutting elements, so as to make the woodworking tool resistant to phenomena of wear and to normal damage.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partly sectioned side view of a tool for working wood
- fig. 2 shows a sectioned and enlarged detail of the tool in fig. 1;
- fig. 3 is a block diagram of some steps of the method to make the tool in fig. 1.

### DETAILED DESCRIPTION OF A PREFERENTIAL FORM OF EMBODIMENT

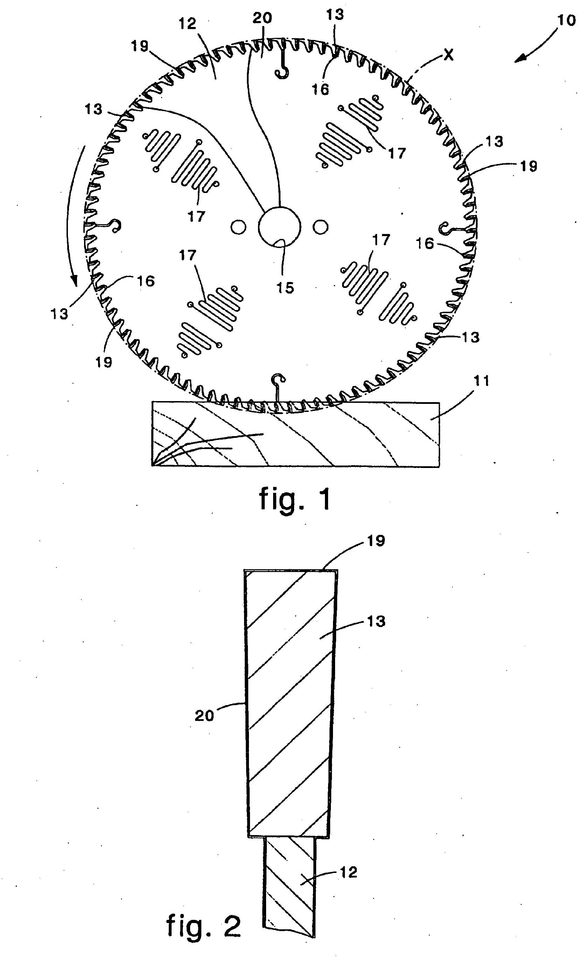

With reference to fig. 1, a tool 10 for working wood or similar materials is in this case a circular blade able to cut a wooden object 11, and comprises a substantially disk-shaped flat body 12, and a plurality of cutting platelets 13, arranged on the periphery of the flat body 12 and able to cut the wooden object 11 when the flat body 12 is made to rotate with a determinate cutting speed.

The flat body 12 is made of steel and comprises an axial hole 15 to allow the tool 10 to be associated with a mandrel, of a conventional type and not shown in the drawings; a plurality of compartments 16, advantageously made near the respective cutting platelets 13, to facilitate the discharge of the wood chip; and a plurality of notches 17, substantially serpentine, and able to absorb the possible vibrations that are generated during normal cutting operations, and hence render the cutting more accurate and silent.

Each cutting platelet 13 is made of sintered material (HW) and comprises a cutting edge 19 having a determinate cutting angle, facing towards the outside and lying on a circular axis X defining the cutting diameter of the tool 10.

The cutting platelets 13 made of sintered material (HW) consist of compound hard metals wherein the particles of carbons are cemented with a ductile metal by means of a sintering process.

The reciprocal connection between the cutting platelets 13 and the flat body 12 is achieved by means of a normal braze welding process, wherein an alloy based on copper, cadmium or other, positioned between the two, is melted at a temperature of around 900°C.

The cutting tool 10 also comprises a covering layer 20 (figs. 1 and 2) made of a determinate covering metal material, which has a high level of hardness, and an optimum sliding coefficient.

The metal material can consist of powders composed of nitrates and/or carbonitrates alloyed for example with titanium (TiN and TiCN), zirconium (ZrN), chromium (CrN), titanium-aluminum (TiAlN and TiAlCN) or others, deposited on the outer surfaces of the cutting tool 10.

The covering layer 20 thus formed has characteristics of toughness, to prevent the risk of breakage, good surface hardness and optimum resistance to the high processing temperatures, so as not to suffer variations in size or lose its mechanical characteristics during the cutting steps.

Moreover, the covering layer 20 has a thickness variable from 1 to 5 µm and confers on the entire tool 10 an optimum resistance to wear, also when the latter is used in conditions which are far from optimum, and guarantees a longer duration of the sharpness of the cutting edge 19, and the finished quality of the cutting performed.

To be more exact, the covering layer 20 confers on the tool 10 an increase in its tribological properties with respect to traditional tools for wood, that is, a greater resistance to the cutting forces and a greater ease of the tool 10 itself to slide inside the wooden object 11.

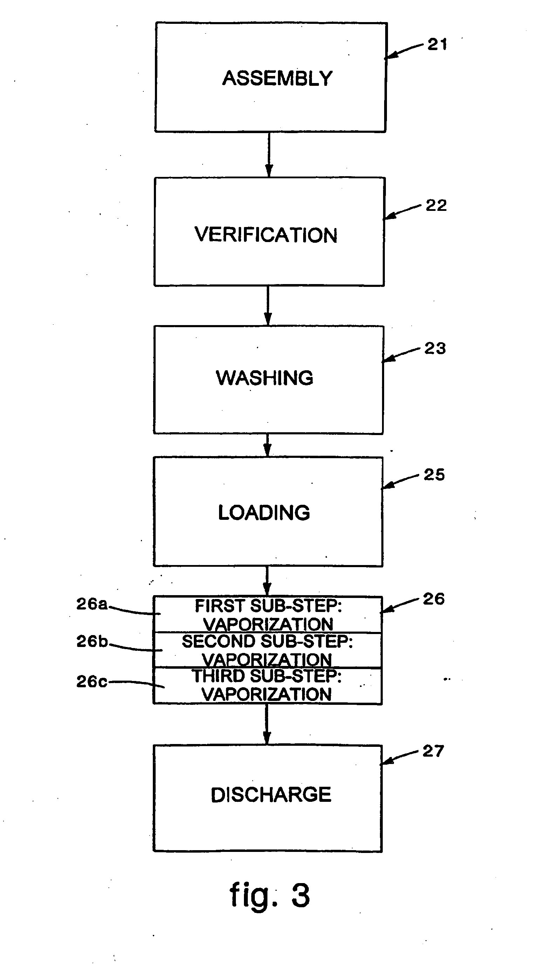

As shown schematically in fig. 3, the method to make the tool 10 comprises an assembly step 21, a verification step 22, a washing step 23, a loading step 25, a vaporization step 26 and a discharge step 27 to discharge the tools 10 treated.

The assembly step 21 provides to assemble the cutting platelets 13 on the flat body 12 by means of braze welding.

The verification step 22 provides a quality control of the tools 10 assembled in the assembly step 21, to check whether they have dead holes or other details that are difficult to clean or defects of different nature not acceptable in the application of this technology.

The washing step 23 consists in that the tools 10 are subjected sequentially to: immersion in a bath of water and washing with detergents and ultrasounds; immersion in an electrolytic bath; rinsing; another immersion in water, to facilitate the discharge in osmosis of the demineralized water; shower wash; and placement in an oven under vacuum at about 105°C in order to dry them.

In the event that one of the tools 10 washed should come into contact with impurities, it must again be subjected to the washing step 23.

The verification step 22 and the washing step 23 allow to prevent rust, dirt or decarburization on the surfaces to be covered, so as to ensure an optimum cover of the surfaces.

During the loading step 25, the washed tools 10 are loaded inside a chamber of a vaporization oven using a relative tool-bearing support, which allows to arrange the tools 10 so as to have a uniform height on the same plane and a symmetrical arrangement in shape and in mass. Therefore, the tools 10 with a greater cutting diameter are arranged at the center of the chamber of the oven. Inside the chamber of the oven a high vacuum is created, that is, the inner pressure is taken to about 10⁻⁵ mbar.

The vaporization step 26 comprises a first sub-step 26a to transform the metal material to be deposited into the gaseous state; a second sub-step 26b to transport the metal material to be deposited, transformed into ionized gas, inside the vaporization oven; and a third sub-step 26c to condense the metal material to be deposited on the tool 10, in order to form the covering layer 20.

During the first sub-step 26a, the metal material to be deposited, for example titanium, is made to evaporate by exploiting the effect of an electric arc under vacuum. The source of the electric arc can consist, according to a substantially known technique, of one or more metal plates, rectangular or circular, located at a negative potential, for example with a cathode connection with a voltage of between about -15V and about -30V, arranged at the sides of the chamber of the deposition oven.

The electric arc generated thus causes a quantity of gross metal to evaporate, proportional to the intensity of its current, and is accelerated and guided along a desired trajectory, by means of a magnetic field, during the second sub-step 26b, towards the tools 10 to be covered, located at a negative potential, for example with a transverse tension variable from between a few dozen volts to about - 1200V.

The evaporated metal material reacts with a reactive gas introduced, such as for example N₂, C₂H₂, CH₄, or others.

The heat load that develops in this step on the ends, and particularly on the tips of the tools 10, normally remains below about 300°C, that is according to the invention, below the tempering temperature of the material that makes up the flat body 12.

Moreover, in the third sub-step 26c, wherein the vaporized metal material is deposited on the outer surfaces of the tool 10, the latter is moved for the whole duration of the process with respect to the source of the metal material to be deposited, in order to obtain substantially uniform thicknesses of the covering layer 20 deposited, whatever the geometric shape of the tool 10.

Advantageously, the Applicant has found that to obtain covering layers 20 with low inner tensions it is necessary to reduce the tensions in the interface between the covering 20 and the outer surface of the tool 10, by means of adequate transition layers, and this is achieved by optimizing the deposition parameters.

The discharge step 27 consists in removing the tools 10 from the vaporization oven in order to store them or subject them to possible further working and finishing steps.

It is also clear that, although the present invention has been described with reference to specific examples, a person skilled in the art would certainly be able to achieve many other equivalent production method of a tool for working wood or similar materials, having the characteristics expressed in the claims and hence all of which shall come within the scope of protection defined thereby.

## Claims

1. Method to make a tool for working wood or similar materials, provided with a substantially flat central body (12) made of a first metal material, and a plurality of cutting elements (13) made of a second metal material different from said first metal material and disposed on the periphery of said central body (12), wherein said plurality of cutting elements (13) is able to perform the working of said wood by removing woodchips therefrom, said method comprising at least an assembly step (21) wherein said cutting elements (13) are disposed on the periphery of said central body (12), at least a loading step (25), subsequent to said assembly step (21), wherein said tool (10) for working wood or similar materials is positioned inside an environment with controlled pressure and temperature, and at least a vaporization step (26), wherein a third metal material, different from said first and second metal materials, is vaporized inside said environment with controlled pressure and temperature, in order to deposit a covering layer (20) of said third metal material at least onto the lateral surfaces of said central body (12) and/or of said cutting elements (13), **characterized in that,** during said vaporization step (26), the working temperature is lower than the tempering temperature of said first metal material.

2. Method as in claim 1, **characterized in that** in said assembly step (21) said cutting elements (13) are attached to said central body (12) by means of braze welding.

3. Method as in claim 1, **characterized in that** between said assembly step (21) and said loading step (25) there is at least a washing step (23), wherein said tool (10) for working wood or similar materials is sequentially immersed in a water bath and washed with detergents and ultrasounds, then immersed in an electrolytic bath, then rinsed and then again immersed in water, in order to facilitate the discharge in osmosis of the demineralized water, then shower washed, and finally arranged in an oven in order to dry said tool (10).

4. Method as in claim 3, **characterized in that** between said assembly step (21) and said washing step (23) at least a verification step (22) is provided, wherein a quality control is carried out of said tool (10) assembled during said assembly step (21).

5. Method as in claim 1, **characterized in that** in said loading step (25) a plurality of tools (10) is loaded inside said environment with controlled pressure and temperature by means of a relative tool-bearing support, so that any of said tools (10) is arranged with respect one to each other at a uniform height on a same plane, and symmetrically.

6. Method as in claim 1, **characterized in that** said vaporization step (26) comprises a first sub-step (26a) wherein said third metal material is transformed into a gaseous state; a second sub-step (26b) wherein said third metal material transformed into gas is transported along a desired trajectory inside said environment with controlled pressure and temperature; and a third sub-step (26c) to condense said third metal material on said tool (10) in order to form said covering layer (20).

7. Method as in claim 6, **characterized in that** in said first sub-step (26a) said third metal material is made to evaporate by exploiting the effect of an electric arc in a vacuum.

8. Method as in claim 6, **characterized in that** in said second sub-step (26b) said third metal material transformed into gas is accelerated and guided along a desired trajectory, by means of a magnetic field.

9. Method as in claim 6, **characterized in that** in said third sub-step (26c) said tool (10) is moved with respect to the source of said third metal material so as to have a substantially uniform thickness of said covering layer (20).

10. Method as in claim 1, **characterized in that** subsequent to said vaporization step (26) a discharge step (27) is provided, wherein said tool (10) is discharged from said environment with controlled pressure and temperature.

## Patentansprüche

1. Verfahren zum Herstellen eines Werkzeugs zum Bearbeiten von Holz oder ähnlichen Materialien, bereitgestellt mit einem im Wesentlichen flachen zentralen Körper (12), hergestellt aus einem ersten Metallmaterial, und einer Mehrzahl von Schnittelementen (13), hergestellt aus einem zweiten Metallmaterial unterschiedlich von dem ersten Metallmaterial und auf der Peripherie des zentralen Körpers (12) angeordnet, wobei die Mehrzahl von Schnittelementen (13) in der Lage ist, das Bearbeiten des Holzes durch Entfernen von Holzspänen davon durchzuführen, wobei das Verfahren zumindest einen Aufbauschritt (21), wobei die Schnittelemente (13) auf der Peripherie des zentralen Körpers (12) angeordnet werden, zumindest einen Ladeschritt (25), folgend auf den Aufbauschritt (21), wobei das Werkzeug (10) zum Bearbeiten von Holz oder ähnlichen Materialien innerhalb einer Umgebung mit gesteuertem Druck und Temperatur positioniert wird, und zumindest einen Verdampfungsschritt (26), wobei ein drittes Metallmaterial unterschiedlich von den ersten und zweiten Metallmaterialien innerhalb der Umgebung mit gesteuertem Druck und Temperatur verdampft wird, um eine bedeckende Schicht (20) des dritten Metallmaterials zumindest auf den lateralen Oberflächen des zentralen Körpers (12) und/oder der Schnittelemente (13) abzuscheiden, umfasst, **dadurch gekennzeichnet, dass** während des Verdampfungsschritts (26) die Arbeitstemperatur niedriger als die Anlasstemperatur des ersten Metallmaterials ist.

2. Verfahren nach Anspruch 1, **dadurch gekennzeichnet, dass** im Aufbauschritt (21) die Schnittelemente (13) an den zentralen Körper (12) mittels Schweißlöten befestigt werden.

3. Verfahren nach Anspruch 1, **dadurch gekennzeichnet, dass** es zwischen dem Aufbauschritt (21) und dem Ladeschritt (25) zumindest einen Waschschritt (23) gibt, wobei das Werkzeug (10) zum Bearbeiten von Holz oder ähnlichen Materialien aufeinander folgend in ein Wasserbad eingetaucht und mit Reinigungsmitteln und Ultraschall gewaschen, dann in ein Elektrolytbad eingetaucht, dann gespült und dann wieder in Wasser eingetaucht, um die Entladung in Osmose des entmineralisierten Wassers zu erleichtern, dann geduscht und schließlich in einem Ofen angeordnet wird, um das Werkzeug 10 zu trocknen.

4. Verfahren nach Anspruch 3, **dadurch gekennzeichnet, dass** zwischen dem Aufbauschritt (21) und dem Waschschritt (23) zumindest ein Verifikationsschritt (22) bereitgestellt wird, wobei eine Qualitätskontrolle des Werkzeugs (10), aufgebaut während des Aufbauschritts (21), durchgeführt wird.

5. Verfahren nach Anspruch 1, **dadurch gekennzeichnet, dass** im Ladeschritt (25) eine Mehrzahl von Werkzeugen (10) innerhalb der Umgebung mit gesteuertem Druck und Temperatur mittels eines relativen werkzeugtragenden Trägers geladen wird, so dass jedes der Werkzeuge (10) bezüglich zueinander bei einer gleichförmigen Höhe auf derselben Ebene und symmetrisch angeordnet ist.

6. Verfahren nach Anspruch 1, **dadurch gekennzeichnet, dass** der Verdampfungsschritt (26) einen ersten Unterschritt (26a), wobei das dritte Metallmaterial in einen gasförmigen Zustand umgewandelt wird; einen zweiten Unterschritt (26b), wobei das dritte in Gas umgewandelte Metallmaterial entlang einer gewünschten Trajektorie innerhalb der Umgebung mit gesteuertem Druck und Temperatur transportiert wird; und einen dritten Unterschritt (26c) zum Kondensieren des dritten Metallmaterials auf dem Werkzeug (10), um die bedeckende Schicht (20) zu bilden, umfasst.

7. Verfahren nach Anspruch 6, **dadurch gekennzeichnet, dass** im ersten Unterschritt (26a) das dritte Metallmaterial zum Verdampfen gebracht wird durch Ausnutzen des Effekts eines Lichtbogens in einem Vakuum.

8. Verfahren nach Anspruch 6, **dadurch gekennzeichnet, dass** im zweiten Unterschritt (26b) das dritte in Gas umgewandelte Metallmaterial entlang einer gewünschten Trajektorie mittels eines magnetischen Feldes beschleunigt und geführt wird.

9. Verfahren nach Anspruch 6, **dadurch gekennzeichnet, dass** im dritten Unterschritt (26c) das Werkzeug (10) bezüglich der Quelle des dritten Metallmaterials bewegt wird, um eine im Wesentlichen gleichförmige Dicke der bedeckenden Schicht (20) zu erhalten.

10. Verfahren nach Anspruch 1, **dadurch gekennzeichnet, dass** anschließend an den Verdampfungsschritt (26) ein Entladungsschritt (27) bereitgestellt ist, wobei das Werkzeug (10) von der Umgebung mit gesteuertem Druck und Temperatur entladen wird.

## Revendications

1. Méthode pour la réalisation d'un outil pour le travail du bois ou matériaux similaires, pourvu d'un corps central sensiblement plat (12) constitué d'un premier matériau métallique, et d'une pluralité d'éléments tranchants (13) constitués d'un deuxième matériau métallique différent dudit premier matériau métallique et disposés à la périphérie dudit corps central (12), ladite pluralité d'éléments tranchants (13) étant apte à effectuer le travail dudit bois en en retirant des copeaux, ladite méthode comprenant au moins une étape d'assemblage (21) où lesdits éléments tranchants (13) sont disposés à la périphérie dudit corps central (12), au moins une étape de chargement (25), postérieure à ladite étape d'assemblage (21), où ledit outil (10) pour le travail du bois ou de matériaux similaires est placé en milieu à température et pression contrôlées, et au moins une étape de vaporisation (26), où un troisième matériau métallique, différent desdits premier et deuxième matériaux métalliques, est vaporisé à l'intérieur dudit milieu à température et pression contrôlées afin de déposer une couche de revêtement (20) dudit troisième matériau métallique au moins sur les surfaces latérales dudit corps central (12) et/ou desdits éléments tranchants (13), méthode **caractérisée en ce que**, lors de ladite étape de vaporisation (26), la température de travail est inférieure à la température de trempe dudit premier matériau métallique.

2. Méthode selon la revendication 1, **caractérisée en ce qu'**à ladite étape d'assemblage (21), lesdits éléments tranchants (13) sont fixés audit corps central (12) par soudobrasage.

3. Méthode selon la revendication 1, **caractérisée en ce qu'**entre ladite étape d'assemblage (21) et ladite étape de chargement (25) a lieu au moins une étape de lavage (23), où ledit outil (10) pour le travail du bois ou de matériaux similaires est immergé séquentiellement dans un bain d'eau et lavé à l'aide de détergents et d'ultrasons, puis immergé dans un bain électrolytique, rincé et immergé à nouveau dans l'eau afin de faciliter l'évacuation par osmose de l'eau déminéralisée, puis douché et enfin placé dans une étuve afin d'y sécher ledit outil (10).

4. Méthode selon la revendication 3, **caractérisée en ce qu'**entre ladite étape d'assemblage (21) et ladite étape de lavage (23) est prévue au moins une étape de vérification (22), où un contrôle de qualité est effectué sur ledit outil (10) assemblé au cours de ladite étape d'assemblage (21).

5. Méthode selon la revendication 1, **caractérisée en ce qu'**à ladite étape de chargement (25), une pluralité d'outils (10) est chargée dans ledit milieu à température et pression contrôlées au moyen d'un porte-outils associé, de sorte que chacun desdits outils (10) se trouve en position symétrique par rapport aux autres, à même hauteur et sur le même plan.

6. Méthode selon la revendication 1, **caractérisée en ce que** ladite étape de vaporisation (26) comprend une première sous-étape (26a) où l'on fait passer ledit troisième matériau métallique à l'état gazeux ; une deuxième sous-étape (26b) où ledit troisième matériau métallique transformé en gaz est acheminé suivant un trajet souhaité à l'intérieur dudit milieu à température et pression contrôlées ; et une troisième sous-étape (26c) destinée à condenser ledit troisième matériau métallique sur ledit outil (10) afin de former ladite couche de revêtement (20).

7. Méthode selon la revendication 6, **caractérisée en ce qu'**à ladite première sous-étape (26a), l'on fait évaporer ledit troisième matériau métallique en exploitant l'effet d'un arc électrique dans le vide.

8. Méthode selon la revendication 6, **caractérisé en ce qu'**à ladite deuxième sous-étape (26b), ledit troisième matériau métallique transformé en gaz est accéléré et guidé suivant un trajet souhaité au moyen d'un champ magnétique.

9. Méthode selon la revendication 6, **caractérisée en ce qu'**à ladite troisième sous-étape (26c), ledit outil (10) est déplacé par rapport à la source dudit troisième matériau métallique afin d'obtenir une épaisseur sensiblement uniforme de ladite couche de revêtement (20).

10. Méthode selon la revendication 1, **caractérisée en ce qu'**après ladite étape de vaporisation (26), il est prévu une étape d'évacuation (27) où ledit outil (10) est évacué dudit milieu à température et pression contrôlées.
